# EUROPÄISCHE PATENTSCHRIFT

(11) **EP 4 026 194 B1**
(45) Veröffentlichungstag und Bekanntmachung des Hinweises auf die Patenterteilung: **22.05.2024**
(21) Anmeldenummer: 20781435.1
(22) Anmeldetag: 03.09.2020
(51) Int. Cl.: H01M 50/233, H01M 50/249

(54) **BATTERIEKASTEN MIT RAHMENVERSTÄRKUNGSELEMENT**
BATTERY BOX WITH FRAME REINFORCING ELEMENT
BOÎTIER DE BATTERIE COMPRENANT UN ÉLÉMENT DE RENFORCEMENT DE STRUCTURE

(30) Priorität: 05.09.2019 DE 102019123906
(43) Veröffentlichungstag der Anmeldung: 13.07.2022
(73) Patentinhaber: Linde + Wiemann SE & Co. KG, 35683 Dillenburg (DE)
(72) Erfinder: SCHMIDT, Werner, 63755 Alzenau (DE); GEORG, Marcel, 57078 Siegen-Geisweid (DE); WAGNER, Christian, 35452 Heuchelheim (DE); ZEISER-RASUMAK, Alexander, 35037 Marburg-Ockershausen (DE); STRAUCH, Hartmut, 35239 Steffenberg (DE); SCHMIDT, Florian, 35396 Gießen (DE); NIERHOFF, Daniel, 46242 Bottrop (DE); ZIEGENBRUCH, Mareike, 44225 Dortmund (DE); FRIEDRICH, Carl-Christoph, 47506 Neukirchen-Vluyn (DE); HILFRICH, Erik, 40470 Düsseldorf (DE)
(74) Vertreter: Weckenbrock, Matthias
(86) Internationale Anmeldenummer: PCT/EP2020/074555
(87) Internationale Veröffentlichungsnummer: WO 2021/043880

(56) Entgegenhaltungen:
- WO-A1-2018/029167
- WO-A1-2020/038698
- DE-A1-102016 115 037

## Beschreibung

Die Erfindung betrifft einen Batteriekasten mit Rahmenverstärkungselement für ein Elektrofahrzeug nach dem Oberbegriff des Anspruches 1.

Bekannte Elektrofahrzeuge weisen als elektrische Energiespeicher verwendete Einheiten auf, nachfolgend als Batterien bezeichnet. Diese sind bei einem modularen Aufbau oftmals in einzelne, separate Zellen gegliedert, nachfolgend als Batteriezellen bezeichnet. Beispielsweise können derartige Batteriezellen durch wiederaufladbare Sekundärzellen gebildet sein, die man in der Regel als Akkumulator bezeichnet.

Für die Großserienproduktion werden Batteriekästen vorgesehen, in welchen die einzelnen Batteriezellen aufgenommen sind. Jede einzelne Batteriezelle wird mit dem Batteriekasten mechanisch verbunden, um ein Verrutschen während des Betriebes zu verhindern. Der Batteriekasten ist insbesondere zum Einbau oder Anbau in bzw. an ein Kraftfahrzeug, beispielsweise ein Personenkraftwagen oder einen Lastkraftwagen, insbesondere im Bodenbereich, vorgesehen. Der Batteriekasten dient einerseits als modulare Baugruppe, welche die Serienfertigung eines Fahrzeugs vereinfacht. Andererseits schützt der Batteriekasten die Batteriezellen vor Umwelteinflüssen sowie vor Beschädigung durch mechanische Einwirkungen, wie sie beispielsweise bei einem Unfall auftreten können. Beispielsweise können die Batteriezellen innerhalb des Batteriekastens mit dem Batteriekasten verschraubt werden. Dazu können Verbindungselemente, die u.a. Schraubknoten, Schraubpunkte, Schraubdome oder Schraubklötze genannt werden, mit einem Bodenblech des Batteriekastens verbunden werden. Die einzelnen Batteriezellen werden dann mit den Verbindungselementen verschraubt.

Das Bodenblech des Batteriekastens dient auch zur Abdichtung des Batteriekastens an dessen Unterseite. Das Bodenblech wird in der Regel geschlossen ausgeführt, und die vorgenannten Verbindungselemente werden an die Innenseite des Bodenbleches gefügt.

Aus der DE 10 2016 115 037 A1 ist ein gattungsgemäßer Batteriekasten für Fahrzeugbatterien bekannt. An derartige Batteriekästen bestehen vielfältige Anforderungen. So müssen sie primär das Gewicht der Batterieelemente, das heißt üblicherweise in Modulen zusammengefasste Batteriezellen, tragen. Hierzu ist in der Regel eine Art Seitenwand oder Rahmen vorgesehen, welcher der Anbindung vieler Bauteile des Batteriegehäuses selber und auch zur direkten oder indirekten Anbindung des Batteriekastens an einer Fahrzeugkarosserie des Kraftfahrzeuges dient.

Derartige Batterieelemente sollen im Falle eines Unfalls oder sonstigen Fahrzeugschäden vor Beschädigungen geschützt werden. Dabei dient der Batteriekasten insbesondere als Barriere für von der Seite und von unten wirkende Crash-Lasten. Dabei kann der Rahmen die Crash-Lasten in Trägerstrukturen, welche sich innerhalb oder unter dem Batterieraum befinden, weiterleiten. Bei einem seitlichen Crash soll jedoch eine möglichst geringe Intrusion des Rahmens in das Innere des Batteriekastens erzielt werden, um die Batterieelemente nicht zu beschädigen.

Aus der DE 10 2016 115 037 A1 ist ein Batteriekasten mit seitlicher Verstärkung bekannt. Diese Seitenwandkonstruktion weist einen weiter innen als die äußeren Seitenwände liegenden Anbindungsbereich zur Verbindung der Seitenwandkonstruktion mit dem Deckel auf.

Die WO2020/038698 A1 betrifft einen Batteriekasten für ein Kraftfahrzeug zur Aufnahme von Batteriezellen mit einem Strukturrahmen mit wenigstens zwei endseitig aneinander gefügten Strukturbauteilen. Jedes Strukturbauteil weist wenigstens ein teilweise hohl ausgebildetes und im Querschnitt im Wesentlichen L-förmiges Profilsegment auf. Innerhalb wenigstens eines der Profilsegmente ist ein Verstärkungselement zur Aufnahme von Aufprallenergie bei einem Aufprall angeordnet. Das Verstärkungselement ist ein Formteil mit einer Mehrzahl von offenen Zellen, die aneinander angrenzend und mit ihrer Längserstreckung im Wesentlichen parallel zueinander angeordnet sind. Im montierten Zustand des Batteriekastens im Kraftfahrzeug sind die offenen Zellen mit ihrer Längserstreckung im Wesentlichen parallel zur Fahrzeugquerrichtung ausgerichtet.

Insgesamt soll der Batteriekasten bzw. dessen Rahmen möglichst wenig Bauraum beanspruchen und im Gehäuseinneren sollten möglichst wenig innere Trägerstrukturen angeordnet sein, was ein Zielkonflikt mit der Crash-Anforderung darstellt.

Vor diesem Hintergrund liegt der Erfindung die Aufgabe zugrunde, einen Batteriekasten für ein Elektrofahrzeug zu schaffen, der einen einfachen konstruktiven Aufbau und zugleich eine verbesserte Energieabsorptionsfähigkeit im Falle einer Kollision aufweist.

Diese Aufgabe wird gelöst mit einem Batteriekasten für ein Elektrofahrzeug mit einem Rahmenverstärkungselement nach Anspruch 1. Vorteilhafte Weiterbildungen der Erfindung ergeben sich aus den Unteransprüchen.

Die Erfindung betrifft einen Batteriekasten zur Aufnahme wenigstens einer Batterie für ein Elektrofahrzeug mit einem außen umlaufenden Rahmen und mit einem Boden.

Erfindungsgemäß ist unterhalb des Rahmens ein umlaufendes Rahmenverstärkungselement zur Verstärkung des Rahmens angeordnet, wobei die Materialstärke des Rahmenverstärkungselements seiner Querschnittshöhe entspricht. Mit anderen Worten weist das Rahmenverstärkungselement zumindest teilweise einen Vollquerschnitt auf.

Die Rahmenverstärkung gewährleistet eine Verteilung der Crash-Last um ein Ausbeulen, insbesondere des oder der Bleche(s) des Gehäusebodens zu vermeiden.

Der Rahmen und das Rahmenverstärkungselement befinden sich in der sogenannten Deformationszone und nehmen crashbedingte Kräfte auf. Diese werden innerhalb des Rahmens verteilt, ohne die crashbedingten Kräfte an die vom Rahmen umschlossenen Batterien bzw. Akkumulatoren weiterzugeben. Somit sind die Batterien weitestgehend crashsicher innerhalb des Fahrzeuges angeordnet, und können in bestehende Fahrzeugprogramme oder bestehende Fahrzeuge aufgenommen werden.

Erfindungsgemäß ist vorgesehen, dass der Boden durch mehrere, beabstandet zueinander angeordnete Bodenlagen ausgestaltet ist, wobei das Rahmenverstärkungselement innerhalb eines durch die Bodenlagen gebildeten Boden-Hohlraums angeordnet ist.

Es handelt sich um einen sogenannten Hybridboden Batteriekasten bzw. Hochvoltspeicher (HVS), wobei der Boden des Batteriekastens aus einer Deck- bzw. Bodenplatte, den Bodenlagen, bestehen kann. Der Boden kann also aus mehreren Lagen als "Sandwichkonstruktion" ausgebildet sein. Auf einer inneren Bodenlage des Bodens liegt der Batterieboden auf, d.h. diese Bodenlage ist in Einbaustellung die obere Lage, welche auch Zwischenboden genannt wird. Die Batterien sind auf der oberen Bodenlage, also dem Zwischenboden, angeordnet. Darunter beabstandet angeordnet ist die äußere bzw. untere Bodenlage, der sogenannte Unterfahrschutz.

Der Rahmen des Batteriekastens kann wenigstens zwei endseitig aneinander gefügte Strukturbauteile aufweisen, welche einen im Wesentlichen rechteckigen Querschnitt aufweisen können. Das Profilsegment kann über Befestigungsmittel mit der Kraftfahrzeugkarosserie verbunden werden.

Gemäß einer weiteren vorteilhaften Variante der Erfindung entspricht die Materialstärke des Rahmenverstärkungselements seiner Querschnittshöhe, wobei die Materialstärke zumindest teilweise den Abstand der Bodenlagen aufweist.

Mit anderen Worten weist das Rahmenverstärkungselement zumindest teilweise über den vollen Abstand der Bodenlagen einen Vollquerschnitt auf.

Es kann insbesondere vorgesehen sein, dass die Querschnittsbreite des Vollquerschnitts des Rahmenverstärkungselements größer ist als dessen Querschnittshöhe.

Unter einem "Vollquerschnitt" ist ein durchgehend, d.h. massiv ausgebildeter Bereich des Profilbauteils zu verstehen, also ein Vollmaterial. Aufgrund dieser Ausgestaltung wird die horizontale Crash-Last unmittelbar in den mehrteiligen Gehäuseboden eingeleitet.

Die untere Bodenlage bildet den Unterfahrschutz und die obere Bodenlage einen Zwischenboden. Gemeinsam bilden sie die Deckschichten einer teilweise hohlen Bodenstruktur. Die Rahmenverstärkung hält die Bodenlagen auf Abstand. Vorrangig durch die in der Bodenstruktur möglichst weit außen liegende, umlaufende Rahmenverstärkung wird die bei einem lateralen Einschlag benötigte, möglichst hohe Reaktionskraft erzeugt.

Eine weitere vorteilhafte Variante der Erfindung sieht vor, dass sich der Rahmen an wenigstens eine Bodenlage anschließt und/oder dass der Rahmen mit wenigstens einer Bodenlage ein geschlossenes Profil bildet, so dass die Crash-Last noch besser von dem Batteriekasten aufgenommen werden kann.

Gemäß einer weiteren vorteilhaften Ausgestaltung der Erfindung ist das Rahmenverstärkungselement zumindest teilweise als Hohlprofil, vorzugsweise Extrusionsprofil, ausgebildet. Auf diese Weise wird gewährleistet, dass die Bodenstruktur bei der Crash-Lasteinleitung im Wesentlichen eben bleibt und nicht beult bzw. knickt. Darüber hinaus können längs und/oder ggf. quer verlaufende Temperiermittelkanäle vorzugsweise auf der dem Batteriegehäuse-Inneren zugewandten Seite im Profil untergebracht werden, die so einen Hohlraum zur Führung von Temperiermitteln schaffen. Neben der Aufgabe einer möglichst hohen Crash-Performance kann das Bauteil dann zusätzlich als Verteiler für ein Kühl- oder Wärmesystem im Batteriegehäuse genutzt werden.

Es kann vorgesehen sein, dass das Rahmenverstärkungselement den Boden-Hohlraum zwischen den Bodenlagen zumindest bereichsweise vollständig ausfüllt, um die crashbedingten Kräfte nach besser aufnehmen zu können.

In einer vorteilhaften Weiterbildung der Erfindung ist der Rahmen durch Extrusion, Rollprofilieren oder Kanten hergestellt.

Gemäß einer weiteren vorteilhaften Ausgestaltung der Erfindung deckt der Rahmen die Stirnseiten des Bodens ab. Auf diese Weise ist eine gute Abdichtung des Rahmens, insbesondere für einen verbesserten Korrosionsschutz gewährleistet. Der Rahmen liefert zudem eine Anbindung an den Gehäusedeckel. Dennoch ist eine gute Einleitung der Crash-Last gewährleistet.

Der außen umlaufende Rahmen kann aus einem Hohlprofil gebildet sein, insbesondere aus einem Mehrkammerhohlprofil. Bevorzugt sind in dem Rahmen wenigstens ein Querträger und wenigstens ein Längsträger angeordnet. Durch den wenigstens einen Querträger und den wenigstens einen Längsträger werden Aufnahmeräume zur Aufnahme der wenigstens einen Batterie ausgebildet. Die wenigstens eine Batterie wird dann insbesondere derart in die Aufnahmeräume eingesetzt, dass sie flächig und bevorzugt unter einer Vorspannkraft gegen die Stege stehend in den Aufnahmeräumen gekoppelt wird, insbesondere erfolgt die Kopplung durch Schrauben. Die in jeder Batterie entstehende Wärme kann auf diese Weise über den Batterieboden mittels Wärmeleitung an den Boden des Batteriekastens weitergegeben werden. Es erfolgt somit eine Wärmeleitung von dem Batterieboden an den Boden des Batteriekastens. Denkbar ist auch, dass der Batterie Wärme zugeführt wird, um eine bestimme Betriebstemperatur bereit zu stellen.

Darüber hinaus dient der Rahmen zur lagesicheren Aufnahme und transportsicheren Halterung der Batterien, die innerhalb des Fahrzeugs angeordnet sind. Der Rahmen kann die Akkumulatoren vollumfänglich oder zumindest teilumfänglich umfassen und erste Befestigungsmittel zur Befestigung der Akkumulatoren am Rahmen und zweite Befestigungsmittel zur Befestigung des Rahmens an Fahrzeugteilen aufweisen.

Die Hohlprofilabschnitte des Rahmens weisen mindestens eine Deformationszone auf, um crashbedingte Belastungen mindestens teilweise zu absorbieren. Ein derartiger Rahmen umfasst die innerhalb des Fahrzeuges angeordneten Akkumulatoren und schützt sie somit weitestgehend vor einer crashbedingten Beschädigung. Dies erfolgt, indem der Rahmen, insbesondere die Deformationszone, crashbedingte Kräfte aufnehmen und innerhalb des Rahmens verteilen kann, um so die crashbedingten Kräfte an die vom Rahmen umschlossenen Akkumulatoren möglichst klein zu halten. Somit sind die Akkumulatoren weitestgehend crashsicher innerhalb des Fahrzeuges angeordnet, und können in bestehende Fahrzeugprogramme oder bestehende Fahrzeuge aufgenommen werden und als sichere Halterung für Akkumulatoren dienen.

Aus dem Stand der Technik ist bekannt, dass der Kraftleitungspfad hauptsächlich durch den Modulraum des Batteriegehäuses geführt wird. Aus diesem Grund kann es zu einem Ausbeulen oder Einkippen der Innenseite der Rahmenstruktur in den Bauraum der Batteriemodule kommen. Aufgrund der Erfindung wird eine damit unweigerlich verbundene Beschädigung ebendieser größtenteils vermieden. Die Hohlprofilanschnitte des Rahmens weisen mindestens eine Deformationszone auf, um crashbedingte Belastungen mindestens teilweise zu absorbieren. Ein derartiger Rahmen umfasst die innerhalb des Fahrzeuges angeordneten Akkumulatoren und schützt sie somit weitestgehend von einer crashbedingten Beschädigung.

Gemäß einer Weiterbildung der Erfindung sind der Rahmen des Batteriekastens und wenigstens eine Bodenlage miteinander stoffschlüssig und/oder formschlüssig gekoppelt, insbesondere verschweißt. Bei der Verschweißung kann es sich um Laserschweißen mit durchgehender Naht oder Steppnaht und einer Nahtabdichtung handeln, um so einen dichten Innenraum zu schaffen. Mindestens eine Bodenlage, insbesondere der Zwischenboden ist geschweißt und ggf. geklebt. Die als Unterfahrschutz bezeichnete Bodenlage kann ebenfalls geschweißt und/oder geklebt sein. Denkbar ist auch eine kraftschlüssige Kopplung des Unterfahrschutzes mit dem Rahmen, beispielsweise mittels Verschrauben.

Erfindungsgemäß ist bzw. sind im Boden-Hohlraum zwischen den Bodenlagen oder auf einer Bodenlage mindestens ein Quer-Profilbauteil und/oder mindestens ein Längs-Profilbauteil zur Versteifung des Rahmenverstärkungselements vorgesehen. Diese stützen den Vollquerschnittsrahmen nach innen ab.

Gemäß einer Weiterbildung der Erfindung weist das Rahmenverstärkungselement wenigstens ein Durchgangsloch und/oder wenigstens eine ein- oder zweiseitige Vertiefung auf. Diese reduzieren geringfügig die Crash-Performance, wirken sich aber überproportional positiv auf ein geringes Gesamtgewicht aus.

Vorteilhafterweise kann vorgesehen sein, dass mindestens eine Bodenlage aus einem metallischen Werkstoff ausgebildet ist, bevorzugt sind beide Bodenlagen aus einem metallischen Werkstoff, insbesondere aus Stahl oder einer Stahllegierung, ausgebildet. Vorzugweise können die Bodenlagen aus einem Stahlblech hergestellt sein, wodurch die Crash-Performance bzw. der Intrusions-Widerstand des Batteriekastens weiter erhöht wird.

Die wenigstens eine Bodenlage kann eine Stärke von maximal etwa 0,8 mm bis 2 mm, vorzugsweise 1,5 mm aufweisen.

Es ist denkbar, dass das Rahmenverstärkungselement und wenigstens eine Bodenlage miteinander stoffschlüssig und/oder formschlüssig gekoppelt, insbesondere geschweißt und/oder geklebt sind. Hierbei kommt insbesondere Schutzgas-, Laser-, oder Widerstandsschweißen in Betracht.

Darüber hinaus können die Bodenlagen miteinander stoffschlüssig und/oder formschlüssig gekoppelt, insbesondere verschweißt, vorzugsweise punktgeschweißt oder lasergeschweißt sein. Auf diese Weise sind ein einfaches Herstellungsverfahren und eine feste Verbindung der Bodenlagen gewährleistet. Daraus folgt eine Erhöhung der Scherfestigkeit und somit der Crashsicherheit. Für die Punktschweißung können in den Bodenlagen sogenannte Verprägungen eingebracht sein, so dass sich die beabstandeten Bodenlagen an wenigen Stellen berühren und dort gefügt werden können.

Gemäß einer weiteren vorteilhaften Ausgestaltung der Erfindung ist im Boden-Hohlraum eine Temperiereinrichtung, insbesondere eine Kühleinrichtung zum Abführen der Wärme der wenigstens einen Batterie oder eine Heizeinrichtung zum Zuführen von Wärme zur Batterie angeordnet. Die Temperiereinrichtung befindet sich auf der äußeren bzw. unteren Bodenlage, so dass die Temperiereinrichtung folglich zwischen den Bodenlagen angeordnet ist. Hierdurch wird eine besonders gute Wärmeleitung vom Batterieboden über die innere Bodenlage zu der Temperiereinrichtung ermöglicht.

In einer weiteren Variante der Erfindung steht die untere Bodenlage gegenüber der zu den Batterien gerichteten oberen Bodenlage nach außen vor. Auf diese Weise wird die Möglichkeit für eine einfache Anbindung des Rahmens des Batteriekastens an den Boden geschaffen. Denn in die nach außen vorstehenden Abschnitte des Bodens, insbesondere eine oder mehrere Bodenlagen, können Befestigungsmittel zur Anbindung an den Rahmen angebracht werden. Alternativ oder zusätzlich ist es denkbar, dass der Rahmen an die nach außen vorstehenden Abschnitte des Bodens angeschweißt wird, so dass eine sichere Verbindung zwischen Rahmen und Boden zur Bildung des Batteriekastens gegeben ist und der Halt des Bodens am Rahmen nochmal verbessert wird. Die zu den Batterien gerichtete Bodenlage ist als Zwischenboden zu verstehen, d.h. auf ihr stehen die Batterien auf. Unterhalb der oberen Bodenlage befinden sich die Temperiereinrichtung und darunter die untere Bodenlage, d.h. der Unterfahrschutz. Der Rahmen des Batteriekastens kann zwischen den nach außen vorstehenden Abschnitten der Bodenlagen angeordnet und mit diesen gekoppelt, insbesondere verschweißt werden. Dadurch wird der Halt des Bodens am Rahmen nochmal verbessert.

Das Rahmenverstärkungselement kann eine Materialstärke von mindestens 3 mm, vorzugsweise 6 mm aufweisen.

Darüber hinaus ist es denkbar, dass der Rahmen wenigstens ein Innenverstärkungsprofil aufweist, welches innerhalb des Rahmens bzw. des Rahmenprofils angeordnet ist. Wenn der Rahmen einseitig offen oder aus mehreren Teilen gefügt ist, können noch zusätzliche Innenverstärkungen in den Rahmen eingebracht werden. Dadurch kann die Crash-Performance weiter verbessert oder alternativ bei gleicher Crash-Performance das Gewicht gegenüber einer unverstärkten Variante reduziert werden.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen zum Teil schematisch:
- Figur 1: einen Batteriekasten mit einem umlaufenden Rahmen und einem Rahmenverstärkungselement,
- Figur 2: Detailansichten des Bodens des Batteriekastens mit Rahmen
- bis Figur 11: und Rahmenverstärkungselement in unterschiedlichen Ausgestaltungen.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

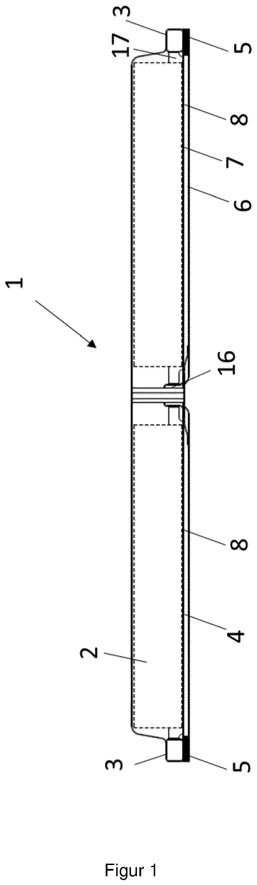

In Figur 1 ist ein Batteriekasten 1 zur Aufnahme wenigstens einer Batterie 2 für ein Elektrokraftfahrzeug dargestellt. Der Batteriekasten 1 kann einen gemäß Figur 1 dargestellten Deckel 9 aufweisen.

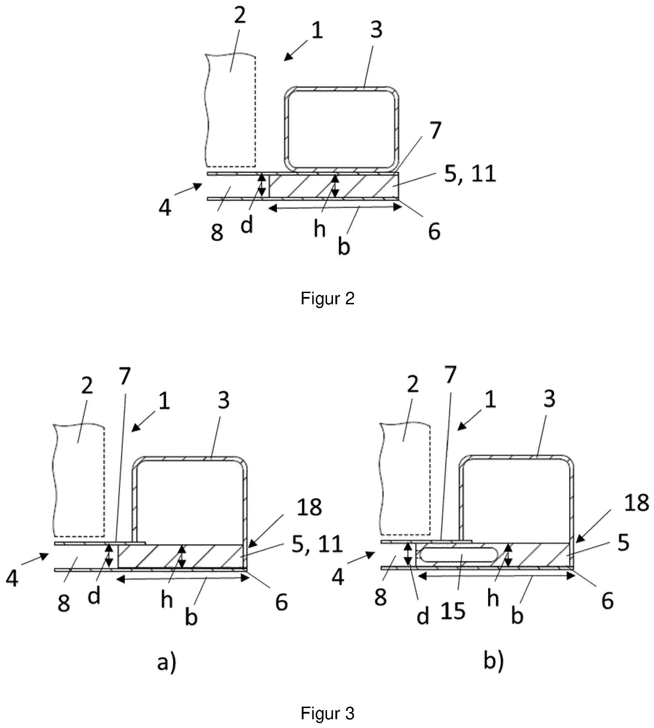

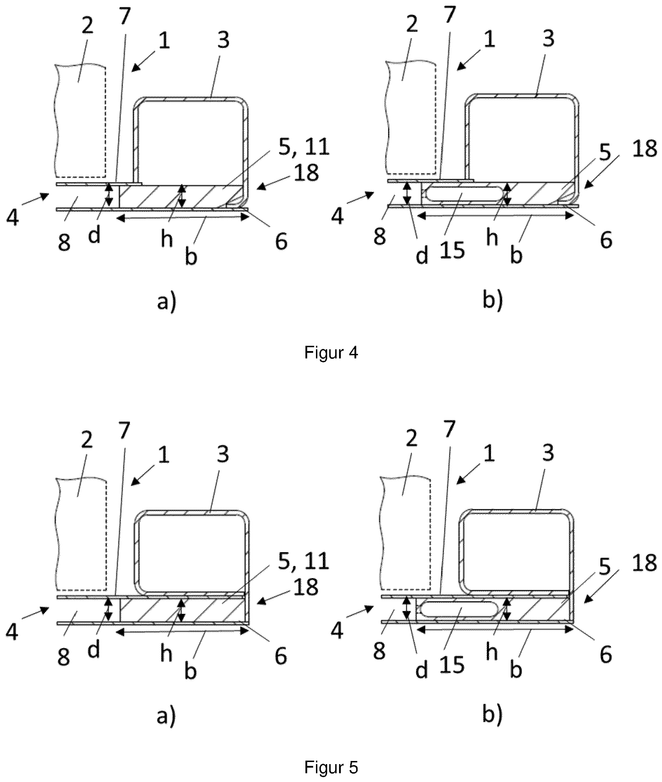

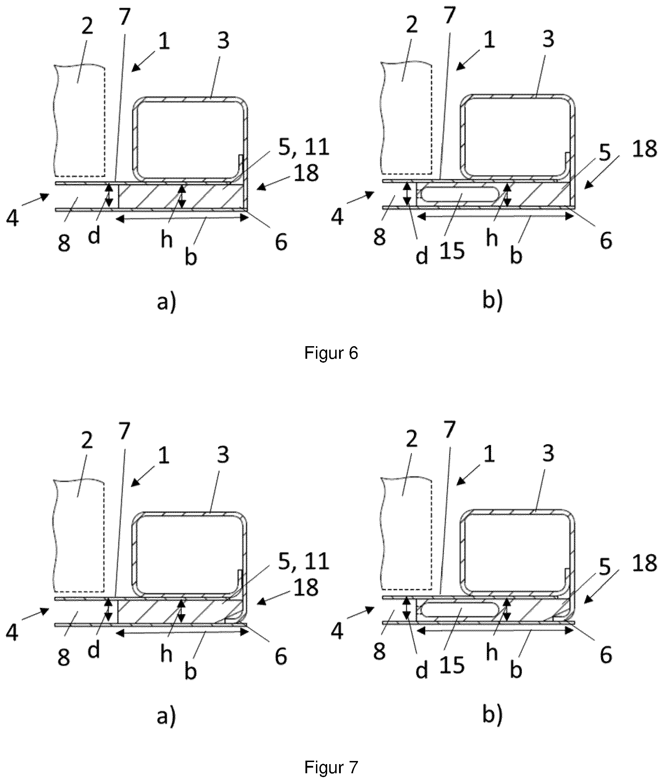

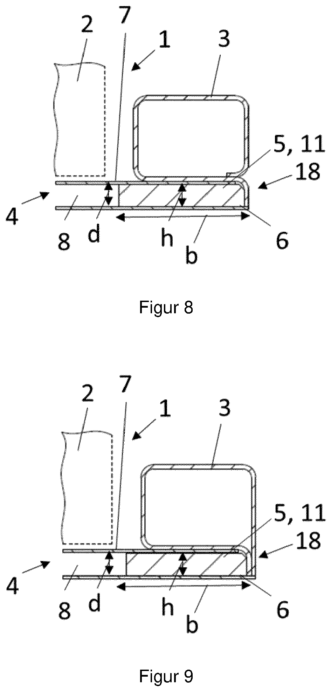

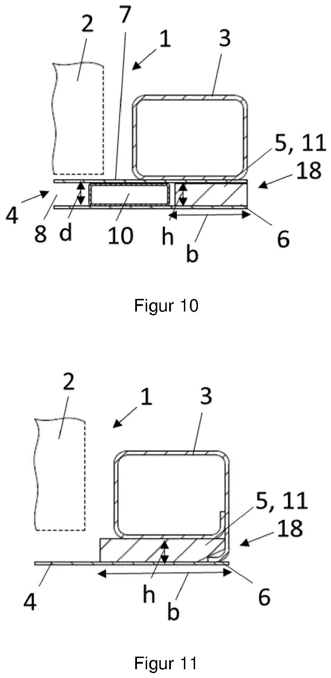

In den Ausführungsformen gemäß Figuren 2-10 ist der Boden 4 des Batteriekastens 1 doppellagig ausgebildet und weist eine Deck- bzw. Bodenplatte, die sogenannten Bodenlagen 6, 7, auf. Figur 11 zeigt eine Ausführungsform mit einem einlagigen Boden 4.

Wie aus den Figuren 1 bis 11 weiter hervorgeht, weist der Batteriekasten 1 einen außen umlaufenden Rahmen 3 auf. Der Rahmen 3 des Batteriekastens 1 kann wenigstens zwei endseitig aneinander gefügte Strukturbauteile 16, 17 mit im Wesentlichen rechteckigen Querschnitt aufweisen. Der Rahmen 3 ist vorliegend aus einem Hohlprofil, insbesondere aus einem Mehrkammerhohlprofil ausgebildet. Aus den Detailansichten gemäß Figuren 2 bis 11 geht der Rahmen 3 mit wenigstens einem Querträger 16 und wenigstens einem Längsträger 17 hervor. Der Rahmen 3 kann über Befestigungsmittel mit der Kraftfahrzeugkarosserie verbunden werden.

Durch den wenigstens einen Querträger 16 und/oder den wenigstens einen Längsträger 17 werden Aufnahmeräume zur Aufnahme der wenigstens einen Batterie 2 ausgebildet, wie aus Figur 1 hervorgeht. Die wenigstens eine Batterie 2 wird insbesondere derart in die Aufnahmeräume eingesetzt, dass sie flächig und bevorzugt unter einer Vorspannkraft gegen die Träger 16, 17 stehend in den Aufnahmeräumen gekoppelt wird. Bevorzugt erfolgt die Kopplung durch Schrauben. Die in jeder Batterie 2 entstehende Wärme kann auf diese Weise über den Batterieboden mittels Wärmeleitung an den Boden 4 des Batteriekastens 1 weitergegeben werden. Es ist aber auch denkbar, dass der Batteriekasten 1 keine Quer- 16 und/oder Längsträger 17 aufweist, insbesondere bei vergleichsweise kleinen Batteriekästen 1.

Wie aus den Figuren 1 bis 11 weiter hervorgeht, ist unterhalb des Rahmens 3 ein umlaufendes Rahmenverstärkungselement 5 zur Verstärkung des Rahmens 3 angeordnet. Die Materialstärke des Rahmenverstärkungselements 5 entspricht dabei seiner Querschnittshöhe h. Mit anderen Worten weist das Rahmenverstärkungselement 5 zumindest teilweise einen Vollquerschnitt 11 auf.

Wie erwähnt, zeigt die Ausführungsform gemäß Figur 11 einen Boden 4 des Batteriekastens 1, welcher einlagig ausgebildet ist, d.h. lediglich die untere Bodenlage 6, den sogenannten Unterfahrschutz, aufweist. Dagegen zeigen die Ausführungsformen gemäß Figuren 1 bis 10 einen doppellagigen Boden 4.

Bei den Ausführungsformen mit doppellagigem Boden 4 entspricht die Materialstärke des Rahmenverstärkungselements 5 seiner Querschnittshöhe h und weist zumindest teilweise den Abstand d der Bodenlagen 6, 7 auf. Mit anderen Worten weist das Rahmenverstärkungselement 5 zumindest teilweise über den vollen Abstand d der Bodenlagen 6, 7 einen Vollquerschnitt 11 auf. Es kann insbesondere vorgesehen sein, dass die Querschnittsbreite b des Vollquerschnitts 11 des Rahmenverstärkungselements 5 größer ist als dessen Querschnittshöhe h.

Unter dem Vollquerschnitt 11 ist ein durchgehend, d.h. massiv ausgebildeter Bereich des Profilbauteils 5 zu verstehen, also ein Vollmaterial. Aufgrund dieser Ausgestaltung wird die horizontale Crash-Last unmittelbar in den mehrteiligen Gehäuseboden 4 eingeleitet. Die Rahmenverstärkung 5 gewährleistet eine Verteilung der Crash-Last um ein Ausbeulen der Bodenlagen 6,7 des Gehäusebodens 4 zu vermeiden.

Wie den Figuren 1 bis 10 weiter zu entnehmen ist, hält die Rahmenverstärkung 5 die Bodenlagen 6, 7 auf einem Abstand d. Vorrangig wird durch die in der Bodenstruktur möglichst weit außen liegende, umlaufende Rahmenverstärkung 5 die bei einem lateralen Einschlag benötigte, möglichst hohe Reaktionskraft erzeugt.

Ferner geht aus den Figuren 1, 5, 6, 7, 10 und 11 hervor, dass sich der Rahmen 3 an wenigstens eine Bodenlage 6, 7 anschließt. Gemäß Figuren 2 bis 9 und 11 bildet der Rahmen 3 mit wenigstens einer Bodenlage 6, 7 ein geschlossenes Profil.

Die Ausführungsformen gemäß Figuren 3 bis 9 und 11 zeigen, dass der Rahmen 3 die Stirnseiten 18 des Bodens 4 abdeckt. Auf diese Weise ist eine gute Abdichtung des Bodens 4, insbesondere für einen verbesserten Korrosionsschutz gewährleistet. Der Rahmen 3 liefert zudem eine Anbindung an den Gehäusedeckel 9.

Aus Figur 10 geht ein Ausführungsbeispiel des Batteriekastens 1 mit Temperiereinrichtung 10 hervor. Hierbei liegt der Batterieboden auf der inneren Bodenlage 7 auf, d.h. diese Bodenlage 7 ist in Einbaustellung die obere Lage des Bodens 4. Diese Bodenlage 7 wird auch Zwischenboden genannt. Darunter kann eine Temperiereinrichtung 10 angeordnet sein, welche sich auf der äußeren bzw. unteren Bodenlage 6, dem sogenannten Unterfahrschutz, befindet, so dass die Temperiereinrichtung 10 folglich zwischen den Bodenlagen 6, 7 angeordnet ist. Auf diese Weise wird eine besonders gute Wärmeleitung vom Batterieboden über die innere Bodenlage 7 zu der Temperiereinrichtung 10 ermöglicht. Auf diese Weise ist es möglich, die Batterie 2 zu kühlen oder auf einer bestimmten Betriebstemperatur zu halten, in dem Wärme zur Batterie 2 zugeführt wird.

In den vorliegenden Ausführungsbeispielen sind beide Bodenlagen 6, 7 aus Stahl oder einer Stahllegierung ausgebildet, wodurch die Crash-Performance bzw. der Intrusions-Widerstand des Batteriekastens 1 weiter erhöht wird. Insbesondere können die Bodenlagen 6, 7 aus einem Stahlblech hergestellt sein und miteinander verschweißt, vorzugsweise punktgeschweißt oder Laser geschweißt werden. Für die Punktschweißung können in den Bodenlagen 6, 7 sogenannte Verprägungen 14 eingebracht sein, so dass sich die beabstandeten Bodenlagen 6, 7 an wenigen Stellen berühren und dort gefügt werden können. Die wenigstens eine Bodenlage 6, 7 kann eine Stärke von maximal etwa 0,8 mm bis 2 mm, vorzugsweise 1,5 mm aufweisen.

Für eine bessere Anbindung des Rahmens 3 an den Boden 4 kann eine Bodenlage 6, 7 gegenüber der anderen Bodenlage 7, 6 nach außen vorstehen, so dass der Rahmen auf einfache Weise mit dem vorstehenden Abschnitt der Bodenlage 6, 7 gefügt werden kann. Denkbar ist insbesondere, dass die untere Bodenlage 6 gegenüber der zu den Batterien 2 gerichteten oberen Bodenlage 7 nach außen vorsteht, wie die Ausführungsformen gemäß Figuren 3, 4, 6, 7 und 9 zeigen. Denn in die nach außen vorstehenden Abschnitte des Bodens 4, insbesondere eine oder mehrere Bodenlagen 6, 7, können Befestigungsmittel zur Anbindung an den Rahmen 3 des Batteriekastens 1 angebracht werden. Alternativ oder zusätzlich ist es denkbar, dass der Rahmen 3 an die nach außen vorstehenden Abschnitte des Bodens 4 angeschweißt wird.

Der Rahmen 3 des Batteriekastens 1 und wenigstens eine Bodenlage 6, 7 sind miteinander stoffschlüssig und/oder formschlüssig gefügt, insbesondere verschweißt. Bei der Verschweißung kann es sich um Laserschweißen mit durchgehender Naht oder Steppnaht mit Nahtabdichtung handeln, um so einen dichten Innenraum zu schaffen. Mindestens eine Bodenlage 6, 7, insbesondere der Zwischenboden 7 ist geschweißt und ggf. geklebt. Die als Unterfahrschutz bezeichnete Bodenlage 6 kann ebenfalls geschweißt und/oder geklebt sein. Denkbar ist auch eine kraftschlüssige Kopplung des Unterfahrschutzes 6 mit dem Rahmen 3, beispielsweise mittels Verschrauben.

Gemäß Figur 1 ist bzw. sind im Boden-Hohlraum 8 zwischen den Bodenlagen 6, 7 oder auf einer Bodenlage 6, 7 mindestens ein Quer-Profilbauteil und/oder mindestens ein Längs-Profilbauteil zur Versteifung des Rahmenverstärkungselements 5 vorgesehen. Diese stützen das Rahmenverstärkungselement 5, also den Vollquerschnittsrahmen nach innen ab.

Die Ausführungsformen gemäß Figuren 2b, 3b, 4b, 5b und 6b unterscheiden sich von denen gemäß Figuren 2a, 3a, 4a, 5a und 6a dadurch, dass wenigstens ein in Profillängsrichtung orientierter Hohlraum 15 zum Führen eines fluiden Wärmeträgers vorgesehen ist.

Die jeweiligen Ausführungsformen gemäß den Figuren 1 bis 11 unterscheiden sich durch die Ausgestaltungen des Bodens 4, insbesondere des Rahmens 3 und der Bodenlagen 6, 7 des Batteriekastens 1.

Gemäß Figur 10 ist die Temperiereinrichtung 10 gegenüber dem Rahmenverstärkungselement 5 weiter innenliegend im Rahmen 3 angeordnet. Auf diese Weise sind die crashbedingten Eigenschaften und die Flüssigkeitsleitung voneinander getrennt im Batteriekasten 1 vorgesehen, d.h. im Außenbereich des Rahmens 3 befindet sich die Rahmenverstärkung 5 und weiter innen das vorzugsweise als Rechteckprofil ausgebildete Kühlleitungsverteilung.

Das Rahmenverstärkungselement 5 und wenigstens eine Bodenlage 6, 7 können miteinander stoffschlüssig und/oder formschlüssig gekoppelt, insbesondere geschweißt und/oder geklebt sind. Hierbei kommt insbesondere Schutzgas-, Laser-, oder Widerstandsschweißen in Betracht.

Darüber hinaus ist es denkbar, dass der Rahmen 3 wenigstens ein Innenverstärkungsprofil aufweist, welches innerhalb des Rahmens 3 angeordnet ist. Dieses Profil kann in einen einseitig offenen oder aus mehreren Teilen gefügten Rahmen 3 eingebracht werden, so dass dadurch die Crash-Performance weiter verbessert oder alternativ bei gleicher Crash-Performance das Gewicht gegenüber einer unverstärkten Variante reduziert werden.

Gemäß einer nicht gezeigten Ausführungsform des Batteriekastens 1 ist es denkbar, dass in Z-Richtung des Rahmenverstärkungselements 5 wenigstens ein Durchgangsloch und/oder wenigstens eine ein- oder zweiseitige Vertiefung vorgesehen ist, welche sich überproportional positiv auf ein geringes Gesamtgewicht auswirkt.

Gemäß einer nicht dargestellten Ausführungsform kann wenigstens eine Batterie 2 mit einer Vorspannkraft flächig auf dem Boden 4, insbesondere auf der oberen Bodenlage 7 anliegen.

Es kann zudem vorgesehen sein, dass für die Bodenlagen 6, 7 unterschiedliche Blechstärken verwendet werden, so dass beispielsweise durch eine Verringerung der Stärke des Bleches der Oberseite der Wärmeübergang zum Temperierbereich, d.h. zu den Batterien 2, verbessert werden kann.

### Bezugszeichenliste

- 1: Batteriekasten
- 2: Batterie
- 3: Rahmen
- 4: Boden
- 5: Rahmenverstärkungselement
- 6: Bodenlage
- 7: Bodenlage
- 8: Boden-Hohlraum
- 9: Deckel
- 10: Temperiereinrichtung
- 11: Vollquerschnitt
- 14: Verprägungen
- 15: Hohlraum
- 16: Querträger - Rahmen
- 17: Längsträger - Rahmen
- 18: Stirnseiten des Bodens

- d: Abstand
- b: Querschnittsbreite
- h: Querschnittshöhe

## Patentansprüche

1. Batteriekasten (1) zur Aufnahme wenigstens einer Batterie (2) für ein Elektrofahrzeug mit einem außen umlaufenden Rahmen (3) und mit einem Boden (4), wobei unterhalb des Rahmens (3) ein umlaufendes Rahmenverstärkungselement (5) zur Verstärkung des Rahmens (3) angeordnet ist, wobei die Materialstärke des Rahmenverstärkungselements (5) seiner Querschnittshöhe (h) entspricht, wobei der Boden (4) durch mehrere, beabstandet zueinander angeordnete Bodenlagen (6, 7) ausgestaltet und das Rahmenverstärkungselement (5) innerhalb eines durch die Bodenlagen (6, 7) gebildeten Boden-Hohlraums (8) angeordnet ist, **dadurch gekennzeichnet, dass** im Boden-Hohlraum (8) zwischen den Bodenlagen (6, 7) oder auf einer Bodenlage (6, 7) mindestens ein Quer-Profilbauteil und/oder mindestens ein Längs-Profilbauteil zur Versteifung des Rahmenverstärkungselements (5) vorgesehen ist bzw. sind.

2. Batteriekasten (1) nach Anspruch 1, **dadurch gekennzeichnet, dass** die Materialstärke des Rahmenverstärkungselements (5) seiner Querschnittshöhe (h) entspricht und diese zumindest teilweise den Abstand der Bodenlagen (6, 7) aufweist.

3. Batteriekasten (1) nach einem der Ansprüche 1 oder 2, **dadurch gekennzeichnet, dass** das Rahmenverstärkungselement (5) in einer Ebene unterhalb der Ebene des Bodens der Batterie (2) angeordnet ist.

4. Batteriekasten (1) nach einem der Ansprüche 1 bis 3, **dadurch gekennzeichnet, dass** sich der Rahmen (3) an wenigstens eine Bodenlage (6, 7) anschließt und/oder dass der Rahmen (3) mit wenigstens einer Bodenlage (6, 7) ein geschlossenes Profil bildet.

5. Batteriekasten (1) nach einem der Ansprüche 1 bis 4, **dadurch gekennzeichnet, dass** das Rahmenverstärkungselement (5) den Boden-Hohlraum (8) zwischen den Bodenlagen (6, 7) zumindest bereichsweise vollständig ausfüllt.

6. Batteriekasten (1) nach einem der vorherigen Ansprüche, **dadurch gekennzeichnet, dass** der Rahmen (3) durch Extrusion, Rollprofilieren oder Kanten hergestellt ist.

7. Batteriekasten (1) nach einem der vorherigen Ansprüche, **dadurch gekennzeichnet, dass** der Rahmen (3) die Stirnseiten (18) des Bodens (4) abdeckt.

8. Batteriekasten (1) nach einem der vorherigen Ansprüche, **dadurch gekennzeichnet, dass** der Rahmen (3) des Batteriekastens (1) aus einem Hohlprofil ausgebildet ist.

9. Batteriekasten (1) nach Anspruch 8, **dadurch gekennzeichnet, dass** in dem Rahmen (3) wenigstens ein Querträger (16) und wenigstens ein Längsträger (17) angeordnet sind.

10. Batteriekasten (1) nach einem der vorherigen Ansprüche, **dadurch gekennzeichnet, dass** das Rahmenverstärkungselement (5) wenigstens ein Durchgangsloch und/oder wenigstens eine ein- oder zweiseitige Vertiefung aufweist.

11. Batteriekasten (1) nach einem der vorherigen Ansprüche, **dadurch gekennzeichnet, dass** mindestens eine Bodenlage (6, 7) aus einem metallischen Werkstoff ausgebildet ist.

12. Batteriekasten (1) nach einem der vorherigen Ansprüche, **dadurch gekennzeichnet, dass** wenigstens eine Bodenlage (6, 7) eine Stärke von maximal etwa 0,8 mm bis 2 mm aufweist.

13. Batteriekasten (1) nach einem der vorherigen Ansprüche, **dadurch gekennzeichnet, dass** das Rahmenverstärkungselement (5) und wenigstens eine Bodenlage (6, 7) miteinander stoffschlüssig und/oder formschlüssig gekoppelt sind.

14. Batteriekasten (1) nach einem der vorherigen Ansprüche, **dadurch gekennzeichnet, dass** der Rahmen (3) des Batteriekastens (1) und wenigstens eine Bodenlage (6, 7) miteinander stoffschlüssig und/oder formschlüssig gefügt sind sind.

15. Batteriekasten (1) nach einem der vorherigen Ansprüche, **dadurch gekennzeichnet, dass** die Bodenlagen (6, 7) miteinander stoffschlüssig und/oder formschlüssig gekoppelt.

16. Batteriekasten (1) nach einem der vorherigen Ansprüche, **dadurch gekennzeichnet, dass** im Boden-Hohlraum (8) eine Kühleinrichtung zum Abführen der Wärme der wenigstens einen Batterie (2) oder eine Heizeinrichtung zum Zuführen von Wärme zur Batterie (2) angeordnet ist.

17. Batteriekasten (1) nach einem der vorherigen Ansprüche, **dadurch gekennzeichnet, dass** die untere Bodenlage (6) gegenüber der zu den Batterien (2) gerichteten oberen Bodenlage (7) nach außen vorsteht.

18. Batteriekasten (1) nach einem der vorherigen Ansprüche, **dadurch gekennzeichnet, dass** das Rahmenverstärkungselement (5) eine Materialstärke von mindestens 3 mm, vorzugsweise 6 mm aufweist.

19. Batteriekasten (1) nach einem der vorherigen Ansprüche, **dadurch gekennzeichnet, dass** der Rahmen (3) wenigstens ein Innenverstärkungsprofil aufweist, welches innerhalb des Rahmens (3) angeordnet ist.

## Claims

1. Battery box (1) for accommodating at least one battery (2) for an electric vehicle, having an externally peripheral frame (3) and having a base (4), wherein, below the frame (3), there is arranged a peripheral frame-reinforcement element (5) for reinforcing the frame (3), wherein the material thickness of the frame-reinforcement element (5) corresponds to the cross-sectional height (h) thereof, wherein the base (4) is formed by multiple base layers (6, 7) arranged spaced apart from one another and the frame-reinforcement element (5) is arranged within a base cavity (8) formed by the base layers (6, 7), **characterized in that**, in the base cavity (8) between the base layers (6, 7) or on a base layer (6, 7), provision is made of at least one transverse profile component and/or at least one longitudinal profile component for stiffening the frame-reinforcement element (5).

2. Battery box (1) according to Claim 1, **characterized in that** the material thickness of the frame-reinforcement element (5) corresponds to the cross-sectional height (h) thereof and this at least partially has the distance between the base layers (6, 7).

3. Battery box (1) according to either of Claims 1 and 2, **characterized in that** the frame-reinforcement element (5) is arranged in a plane below the plane of the base of the battery (2).

4. Battery box (1) according to one of Claims 1 to 3, **characterized in that** the frame (3) adjoins at least one base layer (6, 7), and/or **in that** the frame (3) forms a closed profile with at least one base layer (6, 7).

5. Battery box (1) according to one of Claims 1 to 4, **characterized in that** the frame-reinforcement element (5) at least regionally completely fills the base cavity (8) between the base layers (6, 7).

6. Battery box (1) according to one of the preceding claims, **characterized in that** the frame (3) is produced by extrusion, roll-profiling or edging.

7. Battery box (1) according to one of the preceding claims, **characterized in that** the frame (3) covers the end sides (18) of the base (4).

8. Battery box (1) according to one of the preceding claims, **characterized in that** the frame (3) of the battery box (1) is formed from a hollow profile.

9. Battery box (1) according to Claim 8, **characterized in that** at least one crossmember (16) and at least one longitudinal member (17) are arranged in the frame (3).

10. Battery box (1) according to one of the preceding claims, **characterized in that** the frame-reinforcement element (5) has at least one passage hole, and/or at least one depression on one or two sides.

11. Battery box (1) according to one of the preceding claims, **characterized in that** at least one base layer (6, 7) is formed from a metallic material.

12. Battery box (1) according to one of the preceding claims, **characterized in that** at least one base layer (6, 7) has a thickness of at most approximately 0.8 mm to 2 mm.

13. Battery box (1) according to one of the preceding claims, **characterized in that** the frame-reinforcement element (5) and least one base layer (6, 7) are coupled to one another in a materially bonded and/or form-fitting manner.

14. Battery box (1) according to one of the preceding claims, **characterized in that** the frame (3) of the battery box (1) and least one base layer (6, 7) are joined to one another in a materially bonded and/or form-fitting manner.

15. Battery box (1) according to one of the preceding claims, **characterized in that** the base layers (6, 7) are coupled to one another in a materially bonded and/or form-fitting manner.

16. Battery box (1) according to one of the preceding claims, **characterized in that**, in the base cavity (8), there is arranged a cooling device for removing the heat of the at least one battery (2) or a heating device for supplying heat to the battery (2).

17. Battery box (1) according to one of the preceding claims, **characterized in that** the lower base layer (6) projects outwards in relation to the upper base layer (7), which is directed towards the batteries (2).

18. Battery box (1) according to one of the preceding claims, **characterized in that** the frame-reinforcement element (5) has a material thickness of at least 3 mm, preferably 6 mm.

19. Battery box (1) according to one of the preceding claims, **characterized in that** the frame (3) has at least one inner reinforcement profile which is arranged within the frame (3).

## Revendications

1. Caisson de batterie (1) pour recevoir au moins une batterie (2) pour un véhicule électrique, avec un cadre (3) périphérique extérieur et avec un fond (4), un élément de renforcement de cadre (5) périphérique étant agencé sous le cadre (3) pour renforcer le cadre (3), l'épaisseur de matériau de l'élément de renforcement de cadre (5) correspondant à sa hauteur de section transversale (h), le fond (4) étant constitué de plusieurs couches de fond (6, 7) agencées à distance les unes des autres et l'élément de renforcement de cadre (5) étant agencé à l'intérieur d'une cavité de fond (8) formée par les couches de fond (6, 7), **caractérisé en ce qu'**au moins un composant profilé transversal et/ou au moins un composant profilé longitudinal est ou sont prévu(s) dans la cavité de fond (8) entre les couches de fond (6, 7) ou sur une couche de fond (6, 7) pour rigidifier l'élément de renforcement de cadre (5).

2. Caisson de batterie (1) selon la revendication 1, **caractérisé en ce que** l'épaisseur de matériau de l'élément de renforcement de cadre (5) correspond à sa hauteur de section transversale (h) et celle-ci présente au moins partiellement l'espacement des couches de fond (6, 7).

3. Caisson de batterie (1) selon l'une quelconque des revendications 1 ou 2, **caractérisé en ce que** l'élément de renforcement de cadre (5) est agencé dans un plan situé en dessous du plan du fond de la batterie (2).

4. Caisson de batterie (1) selon l'une quelconque des revendications 1 à 3, **caractérisé en ce que** le cadre (3) se raccorde à au moins une couche de fond (6, 7) et/ou **en ce que** le cadre (3) forme un profilé fermé avec au moins une couche de fond (6, 7).

5. Caisson de batterie (1) selon l'une quelconque des revendications 1 à 4, **caractérisé en ce que** l'élément de renforcement de cadre (5) remplit entièrement au moins par zones la cavité de fond (8) entre les couches de fond (6, 7).

6. Caisson de batterie (1) selon l'une quelconque des revendications précédentes, **caractérisé en ce que** le cadre (3) est fabriqué par extrusion, profilage au rouleau ou pliage.

7. Caisson de batterie (1) selon l'une quelconque des revendications précédentes, **caractérisé en ce que** le cadre (3) recouvre les côtés frontaux (18) du fond (4).

8. Caisson de batterie (1) selon l'une quelconque des revendications précédentes, **caractérisé en ce que** le cadre (3) du caisson de batterie (1) est réalisé à partir d'un profilé creux.

9. Caisson de batterie (1) selon la revendication 8, **caractérisé en ce qu'**au moins une traverse (16) et au moins un longeron (17) sont agencés dans le cadre (3).

10. Caisson de batterie (1) selon l'une quelconque des revendications précédentes, **caractérisé en ce que** l'élément de renforcement de cadre (5) présente au moins un trou traversant et/ou au moins un creux sur un ou deux côtés.

11. Caisson de batterie (1) selon l'une quelconque des revendications précédentes, **caractérisé en ce qu'**au moins une couche de fond (6, 7) est réalisée en un matériau métallique.

12. Caisson de batterie (1) selon l'une quelconque des revendications précédentes, **caractérisé en ce qu'**au moins une couche de fond (6, 7) présente une épaisseur maximale d'environ 0,8 mm à 2 mm.

13. Caisson de batterie (1) selon l'une quelconque des revendications précédentes, **caractérisé en ce que** l'élément de renforcement de cadre (5) et au moins une couche de fond (6, 7) sont couplés entre eux par liaison de matière et/ou par liaison de forme.

14. Caisson de batterie (1) selon l'une quelconque des revendications précédentes, **caractérisé en ce que** le cadre (3) du caisson de batterie (1) et au moins une couche de fond (6, 7) sont assemblés entre eux par liaison de matière et/ou par liaison de forme.

15. Caisson de batterie (1) selon l'une quelconque des revendications précédentes, **caractérisé en ce que** les couches de fond (6, 7) sont couplées entre elles par liaison de matière et/ou par liaison de forme.

16. Caisson de batterie (1) selon l'une quelconque des revendications précédentes, **caractérisé en ce qu'**un dispositif de refroidissement pour évacuer la chaleur de l'au moins une batterie (2) ou un dispositif de chauffage pour fournir de la chaleur à la batterie (2) est agencé dans la cavité de fond (8).

17. Caisson de batterie (1) selon l'une quelconque des revendications précédentes, **caractérisé en ce que** la couche de fond inférieure (6) fait saillie vers l'extérieur par rapport à la couche de fond supérieure (7) orientée vers les batteries (2).

18. Caisson de batterie (1) selon l'une quelconque des revendications précédentes, **caractérisé en ce que** l'élément de renforcement de cadre (5) présente une épaisseur de matériau d'au moins 3 mm, de préférence de 6 mm.

19. Caisson de batterie (1) selon l'une quelconque des revendications précédentes, **caractérisé en ce que** le cadre (3) présente au moins un profilé de renforcement intérieur, qui est agencé à l'intérieur du cadre (3).
